(19) Europäisches Patentamt
European Patent Office
Office européen des brevets

(11) **EP 3 496 079 A1**

(12) **EUROPEAN PATENT APPLICATION**

(43) Date of publication:
**12.06.2019 Bulletin 2019/24**

(51) Int Cl.:
*G09G 3/20* (2006.01)　　　*G06F 1/32* (2019.01)

(21) Application number: **17306718.2**

(22) Date of filing: **07.12.2017**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**MA MD TN**<br><br>(71) Applicant: **THOMSON LICENSING<br>92130 Issy les Moulineaux (FR)** | (72) Inventors:<br>• **SEIFI, Mozhdeh<br>35576 Cesson-Sévigné (FR)**<br>• **REINHARD, Erik<br>35576 Cesson-Sévigné (FR)**<br>• **GARCES, Elena<br>35576 Cesson-Sévigné (FR)**<br><br>(74) Representative: **Huchet, Anne et al<br>InterDigital CE Patent Holdings<br>20, rue Rouget de Lisle<br>92130 Issy-les-Moulineaux (FR)** |

(54) **METHOD FOR MAINTAINING PERCEIVED BRIGHTNESS OF AN IMAGE WITH REDUCED PEAK LUMINANCE, CORRESPONDING COMPUTER PROGRAM COMPUTER AND DEVICE**

(57)　The present invention relates to a method for maintaining the perceived brightness a video image displayed on a display device, comprising the steps of:
- obtaining (100) at least one highlight area of said video image comprising at least one highlight pixel,
- reducing (110) at least a luminance level of said at least one highlight pixel by a given luminance amount, and
- redistributing (120) said given luminance amount to pixels in the neighborhood of said at least one highlight pixel in order to add a glare effect around said at least one highlight pixel.

**Figure 1**

EP 3 496 079 A1

**Description**

**1. Field of the disclosure**

The present invention relates generally to image processing as well as power management. More specifically the invention relates to a method and a device for maintaining the perceived brightness of an image with reduced peak luminance.

The disclosure can be of interest in any field where the perceived quality of an image or a video is limited by the intrinsic performances of the display on which it is rendered. This can be the case for instance when looking at such image or video on a conventional display (i.e. not of the High Dynamic Range, or HDR, kind).

**2. Technical background**

LCD displays contain a panel of pixels which let an amount of light from a backlight through dependent on how the display is driven. The backlight is driven to emit a light at a constant luminance level. The backlight may consist of one or more strips of LEDs at the edge(s) of the display, or a full panel of LEDs may be fitted behind the LCD screen. The power consumption of such a display device is mainly due to the power consumption of the backlight. The power consumption of the backlight can only be reduced by decreasing the luminance level emitted by the backlight.

For display devices without backlight, for example OLED display devices, the power consumption mainly stems from the OLED display panel (OLED matrix) and this power consumption is directly linked to the luminance level of the emitted light.

The present disclosure deals with a method for conventional display devices (with or without backlight) that allows maintaining perceived brightness of the displayed images using less energy.

**3. Summary**

The present disclosure proposes a new and inventive solution for maintaining brightness of an image displayed on display device with reduced peak luminance levels.

It is proposed to reduce the luminance levels of the lighter pixels of the image by a given luminance amount and to redistribute this given luminance amount to pixels in the neighborhood in order to add a glare effect around the lighter pixels. This glare effect contributes to increase the perceived brightness of the lighter pixels.

A particular aspect of the present disclosure relates to a method for maintaining the perceived brightness a video image displayed on a display device, comprising the steps of:

- obtaining at least one highlight area of said video image comprising at least one highlight pixel,
- reducing at least a luminance level of said at least one highlight pixel by a given luminance amount, and
- redistributing said given luminance amount to pixels in the neighborhood of said at least one highlight pixel in order to add a glare effect around said at least one highlight pixel.

Thus the luminance of the highlight pixels of the image is reduced but glare is added around them in order to maintain the perceived brightness of these pixels. In a display device with backlight, the reduction of luminance of the highlight pixels can be obtained by reducing the luminance level of the backlight. Energy or power can thus be saved. And in display devices without backlight, such as OLED or QLED display devices, energy can also be saved since the power consumption versus brightness for such display devices is not linear.

The addition of glare is done selectively in areas where glare has to be seen by the person looking at the image (i.e. the lighter areas). Thus, areas not affected by glare do not loose contrast, yielding in having the overall contrast of the current image not degraded.

According to an embodiment, the step of obtaining at least one highlight area of said video image comprising at least one highlight pixel comprises selecting pixels having a luminance value above a predetermined threshold.

According to an embodiment, the steps of obtaining, reducing and redistributing are performed by solving a mass transport problem on a multi-dimensional histogram of said video image.

The invention also relates to a display device for displaying a video image, said display device comprising

- a light emission-type display panel, and
- a control and processing unit for processing said video image and controlling said light emission-type display panel,

wherein the control and processing unit is configured to

- obtain at least one highlight area of said video image comprising at least one highlight pixel,
- reduce at least a luminance level of said at least one highlight pixel by a given luminance amount, and
- redistribute said given luminance amount to pixels in the neighborhood of said at least one highlight pixel in order to add a glare effect around said at least one highlight pixel.

According to an embodiment, the light emission-type display panel comprises OLEDs or DQ-LEDs.

The global power consumption of such a display device without backlight is thus reduced since the power consumption versus brightness of an OLED or QLED display is not linear.

The invention also relates to a display device for displaying a video image, said display device comprising

- a backlight,
- a light transmission-type display panel, and
- a control and processing unit for processing said video image and controlling said light transmission-type display panel and said backlight,

wherein the control and processing unit is configured to

- obtain at least one highlight area of said video image comprising at least one highlight pixel,
- reduce at least a luminance level of said at least one highlight pixel by a given luminance amount, and
- redistribute said given luminance amount to pixels in the neighborhood of said at least one highlight pixel in order to add a glare effect around said at least one highlight pixel.

According to an embodiment, the luminance level of said at least one highlight pixel by a given luminance amount is reduced by reducing the luminance level of the backlight by said given luminance amount. The power consumption of the backlight is thus decreased, thereby decreasing the power consumption of the display device.

According to an embodiment, the backlight emits light with a spatially varying luminance.

According to an embodiment, the backlight comprises LCDs, CCFLs, OLEDs or DQ-LEDs.

According to an embodiment, the light transmission-type display panel comprises LCDs.

The invention also relates to a computer program product comprising program code instructions for implementing the above-mentioned method, when said program is executed on a computer or a processor.

The invention also relates to a non-transitory computer-readable storage medium storing the above-mentioned computer program product.

## 4. Brief description of the drawings

The invention can be better understood with reference to the following description and drawings, given by way of example and not limiting the scope of protection, and in which:

- Fig.1 is a flow chart of the successive steps implemented when performing a method according to one embodiment of the invention;
- Fig.2 is a figure illustrating the increase of perceived brightness when adding a veiling glare;
- Fig.3 is a schematic view of a display device according to a first embodiment of the invention;
- Fig.4 is a schematic view of a display device according to a second embodiment of the invention; and
- Fig.5 is a curve illustrating the power consumption versus brightness for an OLED display device.

The components in the figures are not necessarily to scale, emphasis instead being placed upon illustrating the principles of the invention.

## 5. Description of embodiments

While example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

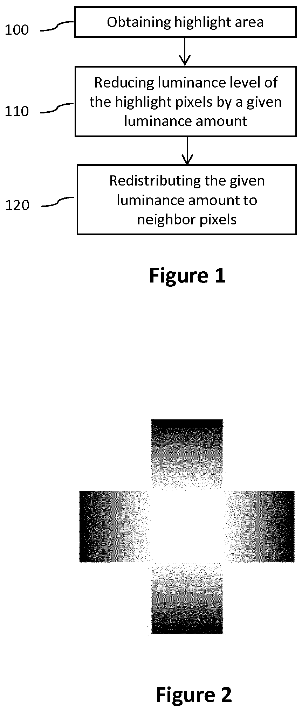

**Fig.1** illustrates the steps of the method of the invention. The method comprises the following steps:

- **step 100:** obtaining at least one highlight area of the video image comprising at least one highlight pixel,
- **step 110:** reducing a luminance level of the highlight pixels of the highlight area by a given luminance amount, and
- **step 120:** redistributing the given luminance amount to pixels in the neighborhood of the highlight pixels in order to add a glare effect around said highlight pixels.

According to this method, it is proposed to reduce the luminance of highlight pixels of the image by a given luminance amount and to add glare around these highlight pixels by redistributing the luminance amount in the neighborhood of the highlight pixels.

The addition of a glare effect around a highlight area of an image is illustrated by Fig.2. This figure shows a black cross with a white center, the whole being placed on a white background. A veiling glare is introduced around the white center. The introduction of such a veiling glare enhances the appearance of brightness of the center of the cross which appears brighter than the white area outside (white background).

According to the invention, the glare addition around the highlight pixels of the image is preceded by a reduction of the luminance of the highlight pixels such that the perceived brightness of the highlight pixels is substantially maintained.

The highlight pixels of the image are obtained in step 100 by selecting the pixels having a luminance level higher than a predetermined global threshold T. The global threshold may be fixed or variable according to the content of the image. According to an embodiment, the global threshold is an absolute value corresponding to a percentage of the maximal luminance. For example, for luminance values coded on 8 bits, the maximal luminance value is 255 and the global threshold value is for example 80% of 255 that is 204.

In step 110, the luminance level of the highlight pixels obtained in step 100 is then reduced by a given luminance amount. According to an embodiment, the given luminance amount is depending on the luminance level (or value) of the highlight pixel. For example, the luminance amount is a percentage of the luminance or value of the highlight pixel. As illustrated later, this luminance reduction can be implemented, in a display device equipped with a backlight, by reducing the luminance level of the backlight.

In step 120, the luminance amount deducted from the highlight pixels is redistributed in their neighborhood in order to create a glare effect around the highlight pixels.

According an embodiment, the implementation of the above steps is viewed as solving a mass-transport problem.

Mass transport problems can be rewritten as the Kantorovich formulation (Villani, C. (2003). Topics in Optimal Transportation. American Mathematical Society), which can be solved using linear problem solvers. In the following, an objective function is derived for the redistribution of luminance values in an image, such that it can be solved as a mass transport problem. To this end, an input image $I$ is indexed using subscripts $i$. The position of a pixel $i$ is indicated with $p_i$ and the luminance of a pixel $i$ is written as $l_i$. A 3-dimensional vector $s_i$ is introduced to denote for each pixel the combination of position and luminance, i.e. $s_i = (p_i, l_i)$.

A normalized multi-dimensional histogram with 3 dimensions is constructed over all vectors $s_i$ of image $I$, which is denoted $h_I$. The luminance dimension of this histogram can be written as $h_{I,l}$ whereas the position dimensions of the histogram can be written as $h_{I,p}$. Thus, $h_I = (h_{I,p}, h_{I,l})$.

A multi-dimensional target histogram is defined next. This histogram encodes the desired features of the output image. In particular, to reduce the peak luminance of an image, a new luminance histogram $h_{R,l}$ for result image R is defined as:

$$h_{R,l}(x) = \begin{cases} h_{I,l}(x) & \text{if } x \leq T \\ 0 & \text{if } x > T \end{cases}$$

T is the global threshold as defined in step 100.

The positional component $\boldsymbol{h}_{R,p}$ of the result histogram $\boldsymbol{h}_R$ is defined to be the same as that of the input image, i.e. $\boldsymbol{h}_{R,p} = \boldsymbol{h}_{I,p}$. After normalization, the desired multi-dimensional result histogram $\boldsymbol{h}_R$ is therefore given by:

$$h_R = \left(h_{R,p}, h_{R,l}\right)$$

A per-pixel mapping of luminance values is denoted $f_l(\boldsymbol{s}_i)$, and a per-pixel mapping of pixel positions is denoted $f_p(\boldsymbol{s}_i)$. A shorthand notation for both the luminance and pixel mappings together is $f = (f_p, f_l)$. These mappings are unknown, but are to be determined through optimization. To this end, the objective function can be formulated as follows:

$$\underset{f}{\operatorname{argmin}} \sum_i \left(\lambda_1 |l_i - f_l(s_i)|_2^2 + \lambda_2 |p_i - f_p(s_i)|_2^2\right) h_I(s_i) + \lambda_3 |h_R - h_{f(I)}|_2^2 \quad (1)$$

wherein the notation $|A|_2^2$ is the square of the $L^2$ norm.

The first two terms in this objective function put a penalty on changing the luminance of a pixel, and on moving the energy from one pixel to another. The latter component implies that moving energy over larger distances is discouraged more. Likewise, the first component implies that changing the luminance of a pixel is costlier for large changes. The third component ensures that the multidimensional output histogram is as close as possible to the target histogram.

The constants $\lambda_1$, $\lambda_2$ and $\lambda_3$ are there to weight the relative contribution of the different components of the objective function.

This objective function can be solved by linear program solvers. For cost-effective optimization, solvers based on the Sliced Wasserstein Distance, disclosed in "Wasserstein Barycenter and its Application to Texture Mixing" Rabin, J., Peyre, G., Delon, J., & Bernot, M... International Conference on Scale Space and Variational Methods in Computer Vision (2011, pp. 435-446), Berlin: Springer, can be employed, which effectively amounts to repeated projection of this multi-dimensional problem to 1 dimension, followed by 1-dimensional histogram equalization.

After calculating the mapping $f$, only the luminance component $f_l$ is retained, which is applied to the input image $I$ in order to obtain the result image R.

Other objective functions may be used. In the objective function (1), the positional penalty of the cost function is linear in the distance between the input pixel and the mapped pixel. It may be beneficial to change this penalty to a non-linear variant, where by larger distances are penalized progressively more. This will encourage a fall-off of the glare that is more consistent with visual experience. So, in an alternative embodiment, the objective function is defined as follows:

$$\underset{f}{\operatorname{argmin}} \sum_i \left(\lambda_1 |l_i - f_l(s_i)|_2^2 + \lambda_2 e^{(p_i - f_p(s_i))^2}\right) h_I(s_i) + \lambda_3 |h_R - h_{f(I)}|_2^2 \quad (2)$$

The method of the invention can also be implemented as performing the following pixel-based optimization, where the goal is to obtain a new luminance value x per pixel as follows:

$$\underset{x}{\operatorname{argmin}} \lambda_1 \sum_i \left(l_i - x_i - \gamma(l_i)\right)^2 + \lambda_2 \sum_i \sum_{j \in N_i} w_{ij} \left(x_i - x_j\right) + \lambda_3 \sum_i \left(l_i^2 - x_i^2\right) \quad (3)$$

such that,

$$\gamma(l) = \begin{cases} 0, & if \ l \leq T \\ C(l), & if \ l > T \end{cases}$$

$$w_{ij} = \begin{cases} 0, & if \ \gamma_i = \gamma_j \\ e^{-(d_{ij}^2)}, & if \ \gamma_i \neq \gamma_j \end{cases}$$

where $C(l)$ is a constant value defined manually, e.g. some value proportional to the maximum value of the luminance in the image, $C(I) = 0.1 \max(L)$, or is another function depending on the original luminance; $T$ is the global threshold; $d_{ij}$ is the Euclidean distance between the two pixels $i$ and $j$; $N_i$ is neighborhood of pixel $i$; $\lambda_1, \lambda_2, \lambda_3$ are constant values to weight the relative contribution of each term.

The first term of the equation puts a penalty on large values of luminance and pushes them to have a slower value defined by the function $\gamma$. The second term guarantees smoothness in the solution for the new values and controls the spatial reachability of the first. The third term guarantees that the total amount of luminance is the same before and after the optimization.

This objective function is quadratic with respect to the unknown luminance x, so can be solved in a closed-form solution with conventional conjugate gradient solvers.

The invention also relates to a display device implementing the above described method. There are two main types of display devices: with backlight or without backlight.

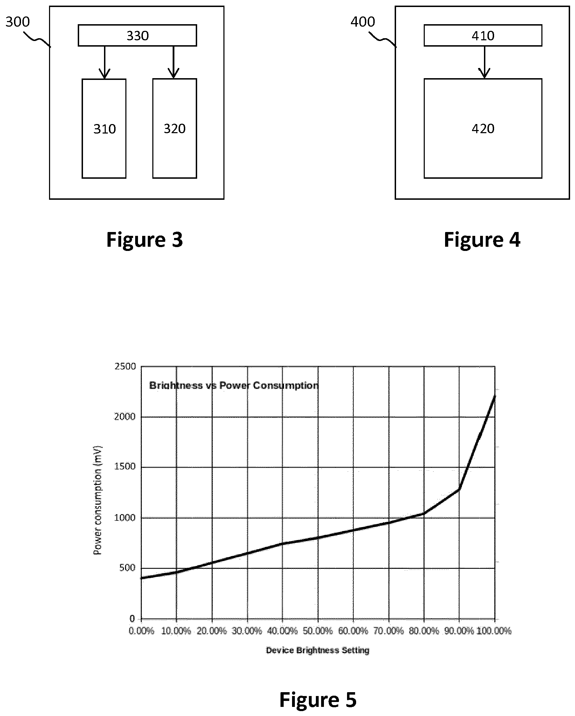

Fig.3 illustrates the case of a display device comprising a backlight. In more detail, the display device referenced 300 comprises a backlight 310, a light transmission-type panel 320 and a control and processing unit 330 for controlling the backlight and the light transmission-type panel. The control and processing unit 330 receives the input image $I$ to be displayed and controls the backlight 310 and the light transmission-type panel 320 in accordance with the input image $I$.

The backlight may comprise LEDs or OLEDs (Organic Light Emitting Diodes), QD-LEDs (Quantum Dot - Light Emitting Diodes) or CCFLs (Cold-Cathode Fluorescent Lamps). The light transmission-type panel 320 may be LCD (Liquid Crystal Display) panel.

In a first embodiment, the steps 110, 120 and 130 are performed by image processing in the control and processing unit 330. The result image R issued from the resolution of the mass-transport problem or from the pixel based optimization is displayed by appropriately controlling the light transmission-type panel 320. The luminance level of the backlight is not reduced.

In a preferred embodiment, the reduction of luminance is obtained by reducing luminance level of the backlight. We can for example consider a case where the threshold T is equal to 80% * $L_{max}$ = 255*0.8=204. The luminance level of the backlight is thus reduced from 20% and the luminance levels of the pixels of the input image $I$ used in the objective function of the mass-transport problem or in the pixel-based optimization should be increased by 25% (the scaling should be 255/204 = 1.25, and therefore amounts to an increase of 25%). In a preferred embodiment, this increase of pixel level is linear.

This embodiment offers a significant advantage in that the power consumption of the display device is reduced since the power consumption of the backlight is reduced. The consumption of the light transmission-type panel 320 and the control and processing unit 330 is low compared to the consumption of the backlight.

Note that, in the mass-transport problem and pixel-based optimization disclosed hereinabove, the global threshold T is an absolute value that could correspond to a percentage of the maximal luminance. Of course, the global threshold T could be defined as a percentage value. In that case, the mathematic formulas illustrating these methods would have to be modified to take into account this new definition of the threshold T.

In case an LCD display is used in conjunction with a spatially varying backlight, then the method could be also adapted to take into consideration the spatially varying illumination. In one example, this may be achieved by replacing the global threshold T with a spatially varying threshold T, after which the remainder of the method may proceed unchanged. Typically, such LCD displays would take the input image and derive a new image to be sent to the LCD screen, as well as a second low-resolution image which is subsequently used to drive the backlight.

The method described herein may be applied to the high-resolution image, whereby a spatially varying threshold T is derived, for example from the backlight image. An exemplary method for achieving this may create a threshold map T(u,v), where u and v are the spatial indices describing the location of each backlight element. Such a method may initially assign to each element T(u,v) a value equal to the intensity of the corresponding back light element. In a subsequent step, the values T(u,v) as well as the intensity of the backlight elements may be reduced so as to achieve a reduction in power consumption. This reduction may be effected by a linear or by a non-linear function. Examples of non-linear functions may for example be derived from known tone mapping functions. The new threshold map T(u,v) may be upsampled to be the same resolution as the display panel, and subsequently, this map may be used to determine a histogram $h_R$. Finally, this histogram is used as described above to produce a new image that can be sent to the LCD panel, and which is consistent with the adjusted backlight elements, in order to produce an image that has the same impression of brightness, albeit with a lower power consumption.

As mentioned above, the method can also be implemented in a display device without backlight as illustrated by Fig.4. The display device referenced 400 comprises a light emission-type panel 410 and a control and processing unit 420 for controlling the light emission-type panel. The control and processing unit 420 receives the input image $I$ to be displayed and controls the light emission-type panel 410 in accordance with the input image $I$.

The light emission-type panel 410 may comprise LEDs or OLEDs (Organic Light Emitting Diodes) or QD-LEDs (Quantum Dot - Light Emitting Diodes).

In that case, the steps 110, 120 and 130 are performed by image processing in the control and processing unit 410. The result image R issued from the resolution of the mass-transport problem or from the pixel based optimization is displayed by appropriately controlling the light transmission-type panel 320.

This embodiment also offers the advantage of reducing the power consumption of the display device is reduced since the power consumption versus brightness of an OLED or QLED display is not linear. **Fig.5** shows a curve representing the power consumption versus brightness of an OLED display device. The curve, which is equivalent to a piecewise function, shows that the power consumption increases with the brightness level but it shows that the power consumption increases at a higher rate in the highest brightness levels (above 90%). So if the peak luminance of the image can be brought below 90%, energy can be saved.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

**Claims**

1.  Method for maintaining the perceived brightness a video image displayed on a display device, comprising:

    - obtaining (100) at least one highlight area of said video image comprising at least one highlight pixel,
    - reducing (110) at least a luminance level of said at least one highlight pixel by a given luminance amount, and
    - redistributing (120) said given luminance amount to pixels in the neighborhood of said at least one highlight pixel in order to add a glare effect around said at least one highlight pixel.

2.  Method according to claim 1, wherein the step of obtaining at least one highlight area of said video image comprising at least one highlight pixel comprises selecting pixels having a luminance value above a predetermined threshold (T).

3.  Method according to claim 1 or 2, wherein obtaining, reducing and redistributing are performed by solving a mass transport problem on a multi-dimensional histogram of said video image.

4.  Display device (400) for displaying a video image, said display device comprising

    - a light emission-type display panel (420), and
    - a control and processing unit (410) for processing said video image and controlling said light emission-type display panel (420),

    **characterized in that** the control and processing unit (410) is configured to

    - obtain at least one highlight area of said video image comprising at least one highlight pixel,
    - reduce at least a luminance level of said at least one highlight pixel by a given luminance amount, and
    - redistribute said given luminance amount to pixels in the neighborhood of said at least one highlight pixel in order to add a glare effect around said at least one highlight pixel.

5.  Display device according to claim 4, wherein the light emission-type display panel (420) comprises OLEDs or DQ-LEDs.

6.  Display device (300) for displaying a video image, said display device comprising

    - a backlight (310),
    - a light transmission-type display panel (320), and
    - a control and processing unit (330) for processing said video image and controlling said light transmission-type display panel (320) and said backlight (310),

    **characterized in that** the control and processing unit (330) is configured to

    - obtain at least one highlight area of said video image comprising at least one highlight pixel,
    - reduce at least a luminance level of said at least one highlight pixel by a given luminance amount, and
    - redistribute said given luminance amount to pixels in the neighborhood of said at least one highlight pixel in order to add a glare effect around said at least one highlight pixel.

**7.** Display device according to claim 6, wherein the luminance level of said at least one highlight pixel by a given luminance amount is reduced by reducing the luminance level of the backlight by said given luminance amount.

**8.** Display device according to claim 6, wherein the backlight emits light with a spatially varying luminance.

**9.** Display device according to any one of claims 6 to 8, wherein the backlight (310) comprises LEDs, CCFLs, OLEDs or DQ-LEDs.

**10.** Display device according to any one of claims 6 to 9, wherein the light transmission-type display panel (320) comprises LCDs.

**11.** Computer program product comprising program code instructions for implementing the method according to any one of claims 1 to 3, when said program is executed on a computer or a processor.

**12.** A non-transitory computer-readable storage medium storing a computer program product according to claim 11.

**Figure 1**

**Figure 2**

300

330

310    320

**Figure 3**

400

410

420

**Figure 4**

2500

Brightness vs Power Consumption

2000

Power consumption (mV)

1500

1000

500

0

0.00%  10.00%  20.00%  30.00%  40.00%  50.00%  60.00%  70.00%  80.00%  90.00% 100.00%

Device Brightness Setting

**Figure 5**

Europäisches
Patentamt

European
Patent Office

Office européen
des brevets

## EUROPEAN SEARCH REPORT

Application Number

EP 17 30 6718

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/250385 A1 (PLUT WILLIAM J [US]) 9 November 2006 (2006-11-09) * paragraph [0031] - paragraph [0146]; figures 1-6 * ----- | 1-12 | INV. G09G3/20 G06F1/32 |
| X | US 2004/201583 A1 (BURROUGHES JEREMY [GB] ET AL) 14 October 2004 (2004-10-14) * paragraph [0025] - paragraph [0066]; figures 1-5 * ----- | 1-12 | |

TECHNICAL FIELDS
SEARCHED (IPC)

G09G
G06F
G06T

The present search report has been drawn up for all claims

| Place of search | Date of completion of the search | Examiner |
|---|---|---|
| Munich | 7 May 2018 | Gartlan, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

EP 3 496 079 A1

## ANNEX TO THE EUROPEAN SEARCH REPORT
## ON EUROPEAN PATENT APPLICATION NO.

EP 17 30 6718

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2018

| Patent document cited in search report | | Publication date | Patent family member(s) | | Publication date |
|---|---|---|---|---|---|
| US 2006250385 | A1 | 09-11-2006 | US | 2006250385 A1 | 09-11-2006 |
| | | | US | 2010026735 A1 | 04-02-2010 |
| | | | US | 2010026736 A1 | 04-02-2010 |
| US 2004201583 | A1 | 14-10-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VILLANI, C.** Topics in Optimal Transportation. American Mathematical Society, 2003

- Wasserstein Barycenter and its Application to Texture Mixing. **RABIN, J. ; PEYRE, G. ; DELON, J. ; BERNOT, M.** International Conference on Scale Space and Variational Methods in Computer Vision. Springer, 2011, 435-446